# EUROPEAN PATENT SPECIFICATION

(11) **EP 4 567 983 B1**
(45) Date of publication and mention of the grant of the patent: **22.04.2026**
(21) Application number: 24764246.5
(22) Date of filing: 26.02.2024
(51) Int. Cl.: H01M 10/613, H01M 10/625, H01M 10/647, H01M 10/653, H01M 10/6551, H01M 10/6556, H01M 50/207, H01M 50/211, H01M 50/289, H01M 50/291

(54) **BATTERY MODULE WITH IMPROVED HEAT-DISSIPATING STRUCTURE AND BATTERY PACK INCLUDING SAME**
BATTERIEMODUL MIT VERBESSERTER WÄRMEABLEITUNGSSTRUKTUR UND BATTERIEPACK MIT EINEM SOLCHEN BATTERIEMODUL
MODULE DE BATTERIE À STRUCTURE DE DISSIPATION THERMIQUE AMÉLIORÉE ET BLOC-BATTERIE COMPRENANT UN TEL MODULE DE BATTERIE

(30) Priority: 28.02.2023 KR 20230026624
(43) Date of publication of application: 11.06.2025
(73) Proprietor: LG Energy Solution, Ltd., Seoul 07335 (KR)
(72) Inventor: SON, Hong Se, Daejeon 34122 (KR); JANG, Byung Do, Daejeon 34122 (KR); PARK, Seung Chul, Daejeon 34122 (KR); LEE, Hyoung Suk, Daejeon 34122 (KR)
(74) Representative: Plasseraud IP
(86) International application number: PCT/KR2024/095435
(87) International publication number: WO 2024/181847

(56) References cited:
- EP-A1- 3 686 987
- EP-A1- 3 758 090
- KR-A- 20170 107 798
- KR-A- 20180 023 699
- KR-A- 20180 117 033
- KR-A- 20210 020 364
- KR-A- 20220 001 228
- KR-B1- 102 112 716
- KR-B1- 102 184 169
- US-B2- 10 665 910

## Description

This application claims the benefit of priority based on Korean Patent Application No. 10-2023-0026624, filed on February 28, 2023.

### [Technical Field]

The present invention relates to a battery module that improves the heat dissipation performance of a battery pack by facilitating conduction heat transfer from a battery module to a pack case.

### [Background Art]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will cause an increase in current, which will again cause an increase in temperature, which will cause a chain reaction, eventually leading to the catastrophic condition of thermal runaway.

In addition, if the secondary batteries are grouped in the form of modules or packs, thermal runaway caused by one secondary battery will cause the other secondary batteries in the vicinity to continuously overheat, resulting in the phenomenon of thermal propagation. In other words, when a thermal runaway occurs in a battery module in a battery pack, a large amount of conductive dust, gas, and flame are emitted from the high-voltage terminals of the battery module, which causes dust to accumulate on the high-voltage terminals of other neighboring battery modules and triggers the phenomenon of thermal propagation by heat transfer by gas and flame.

A design for preventing or delaying heat transfer of high heat from a battery cell or module that has undergone thermal runaway to neighboring battery cells or modules, comprising an insulation design that uses an insulation material to prevent or delay heat transfer from a battery module that has undergone thermal runaway to neighboring battery modules, and a heat dissipation design that initially and rapidly dissipates heat from a battery module that has undergone thermal runaway to the outside of the battery pack to reduce heat transfer to neighboring battery modules.

The prevention and delay of thermal runaway is a critical issue, especially in electric vehicles, where it can lead to life-threatening accidents, and laws and regulations are becoming increasingly strict. In other words, they require a sufficient delay time before the thermal runaway phenomenon spreads to allow time for emergency evacuation and safety measures. Therefore, there is a need for more effective measures to suppress or delay the occurrence of heat transfer in battery packs.

Examples of battery modules are described, for example, in EP 3686987 A1, KR 102112716 B1, EP 3758090 A1, or KR 102184169 B1. An example of a battery pack with direct cooling method is described in US 10665910 B2.

### [Disclosure]

### [Technical Problem]

The present invention is directed to providing a battery module in which the heat generated by a battery module that has generated a thermal runaway can be quickly transferred to a pack case in the form of conduction heat transfer in order to suppress and delay the heat propagation, and thereby be quickly released to the outside as convection heat transfer in the pack case.

However, the technical problem to be solved by the present invention is not limited to the above-described problem, and other problems not mentioned can be clearly understood by a person skilled in the art from the description of the invention described below.

### [Technical Solution]

The present invention relates to a battery module according to claim 1.

The engraved structure may include a lattice structure uniformly arranged longitudinally with respect to the outer surface of the lower frame.

In addition, the engraved structure may include an inwardly recessed space.

The engraved structure may increase a heat transfer area of the lower frame compared to a flat contact surface with respect to the thermal resin to be accommodated in the engraved structure.

Further, the engraved structure may include a curved surface including a hemispherical surface and a semi-elliptical surface.

Additionally, the engraved structure may include a honeycomb structure.

Furthermore, a battery pack may include a plurality of battery modules having the above-described configuration, a pack case configured to accommodate the plurality of the battery modules, and a thermal resin applied between the lower frame of the battery modules and a base plate of the pack case, wherein the thermal resin is filled within a plurality of engraved structures formed on an outer surface of a lower frame of the pack case.

In addition, an area of conduction heat transfer flowing to the base plate through the thermal resin filled in the engraved structures may be increased as compared to a flat contact surface.

Further, the pack case may include a separation wall member dividing the plurality of battery modules from each other, and the base plate may form a bottom surface of the pack case and may include a through-slot formed through a region in contact with the separation wall member.

The through-formed slot may be not exposed to an outside of a separation wall member.

In addition, the battery pack may further include a plurality of through-slots that may be spaced apart along a separation wall member.

### [Advantageous Effects]

The battery module of the present invention having the configuration as described above, wherein the engraved structure provided in the lower frame of the module case provides an expanded heat-dissipating area for the thermal resin, and the expanded heat-dissipating area provided by the engraved structure increases the amount of heat conducted from the battery module to the base plate, thereby allowing the heat of the battery module in which thermal runaway has occurred to be promptly transferred to the base plate and dissipated to the outside of the battery pack, thereby contributing to the suppression or delay of heat propagation.

Further, the through-formed slot formed through the base plate along the separation wall member forming a boundary between the battery modules physically eliminates a portion of the heat conduction path between the battery modules, thereby reducing and delaying the excessive heat transfer caused by the battery module in which the thermal runaway occurs, as well as further promoting the heat dissipation in the base plate.

However, the technical effects that can be obtained through the present invention is not limited to the above-described effects, and other effects not mentioned can be clearly understood by a person skilled in the art from the description of the invention described below.

### [Brief Description of the Drawings]

Because the following drawings attached to the present specification illustrate some embodiments of the present invention and serve to facilitate understanding of the technical idea of the present invention together with the detailed description of the invention described below, the present invention should not be limitedly interpreted on the basis of the drawings.
FIG. 1 is a drawing illustrating a battery module according to the present invention.
FIG. 2 is a drawing illustrating the outer surface of the lower frame of the module case.
FIG. 3 is a cross-sectional view through an incision along the line "A-A" in FIG. 2.
FIG. 4 is a drawing illustrating another embodiment of the lower frame of the module case.
FIG. 5 is a drawing illustrating a battery pack according to the present invention.
FIG. 6 is a cross-sectional view illustrating a contact surface of a battery module and a base plate.
FIG. 7 is a drawing illustrating a conduction heat transfer path in the battery pack of FIG. 6.
FIG. 8 is a drawing illustrating another embodiment of the pack case.
FIG. 9 is a drawing illustrating a conduction heat transfer path in the battery pack of FIG. 8.

### [Best Mode]

The present invention may have various modifications and various embodiments, and thus specific embodiments thereof will be described in detail below.

However, it should be understood that the present invention is not limited to the specific embodiments, and includes all modifications, equivalents, or alternatives within the spirit and technical scope of the present invention.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present invention relates to a battery module, in one example including a plurality of battery cells, and a module case for accommodating the plurality of battery cells, wherein an outer surface of a lower frame of the module case is formed with a plurality of engraved structures, and the plurality of engraved structures form a space for accommodating a thermal resin.

Here, the engraved structure increases the heat transfer area of the lower frame compared to a flat contact surface for the thermal resin to be filled therein.

Accordingly, the battery module of the present invention, from the viewpoint of heat dissipation design, through the increase of the heat transfer area for the thermal resin, can quickly transfer the heat generated in the battery module that has caused the thermal runaway to the pack case in the form of conduction heat transfer, and as a result, a large amount of heat is transferred to the pack case at an early stage, effectively suppressing or delaying the heat propagation within the battery pack as the amount of heat released to the outside as convection heat transfer increases.

### [Mode for Invention]

Hereinafter, specific embodiments of a battery module 200 of the present invention will be described in detail with reference to the accompanying drawings. For reference, the directions of front, back, up, down, left, and right used in the following description to designate relative positions are for the purpose of understanding the invention and refer to the directions shown in the drawings unless otherwise specified.

### [first embodiment]

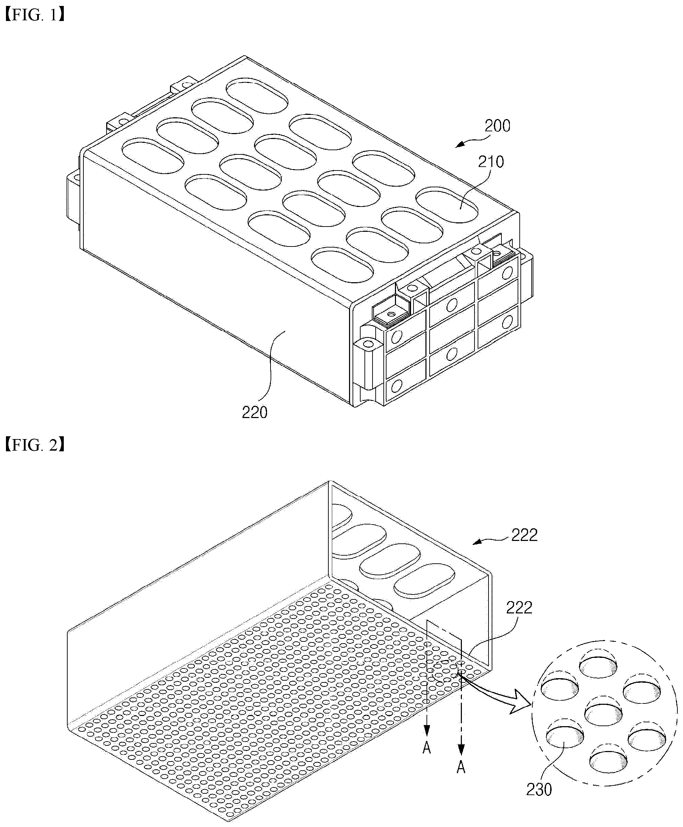

FIG. 1 is a drawing illustrating a battery module 200 according to the present invention, and FIG. 2 is a drawing illustrating the outer surface of a lower frame 222 of a module case 220.

Referring to FIGS. 1 and 2, the battery module 200 includes, in general terms, a plurality of battery cells 210, and a module case 220 accommodating the plurality of battery cells 210. In addition, the battery module 200 may further include parts such as insulation material for insulation between the battery cells 210, a busbar frame assembly (BFA) for electrical connections between the plurality of battery cells 210 and external output, and the like, but these parts are not directly relevant to the heat dissipation design of the battery module 200 according to the present invention and will not be described herein.

Referring to FIG. 2, which shows a lower surface of the module case 220, a plurality of engraved structures 230 are formed on the outer surface of the lower frame 222 of the module case 220. The plurality of engraved structures 230 may form a lattice structure that is uniformly arranged longitudinally with respect to the outer surface of the lower frame 222, and each engraved structure 230 forms an inwardly recessed space.

The plurality of engraved structures 230 may be made by applying any of the known processing technologies, such as pressing, mechanical cutting, plasma processing, electrolytic processing, etching, casting, and the like. And, although the plurality of engraved structures 230 may be manufactured such that the corresponding engraved structures protrude into the inside of the lower frame 222, this may adversely affect the capacity of the battery module 200, so it may be desirable to have a flat inner surface of the lower frame 222.

In the present invention, the plurality of engraved structures 230 form a space accommodated for thermal resin 300. The battery module 200 is housed in the pack case 100 to complete the battery pack 10, wherein the base plate 110 forming the bottom surface of the pack case 100 and the lower frame 222 of the module case 220 are in contact with each other to facilitate conduction heat transfer. Further, to facilitate the conduction heat transfer, the contact surfaces of the base plate 110 and the module case 220 are interposed with a thermal resin 300 having excellent thermal conductivity.

When thermal runaway occurs in any of the battery modules 200 within the battery pack 10, the heat propagates to neighboring battery modules 200 along the base plate 110 where conduction heat transfer is actively occurring. Meanwhile, the base plate 110 is often provided with heat dissipation means such as cooling channels 114. Therefore, it may be advantageous for suppressing or delaying heat propagation to increase the amount of heat dissipated to the outside of the battery pack 10 by conducting the heat of the battery modules 200 where thermal runaway occurs to the base plate 110 as soon as possible inside the pack case 100, before the heat of the battery modules 200 spreads by convective heat transfer to a side other than the base plate 110.

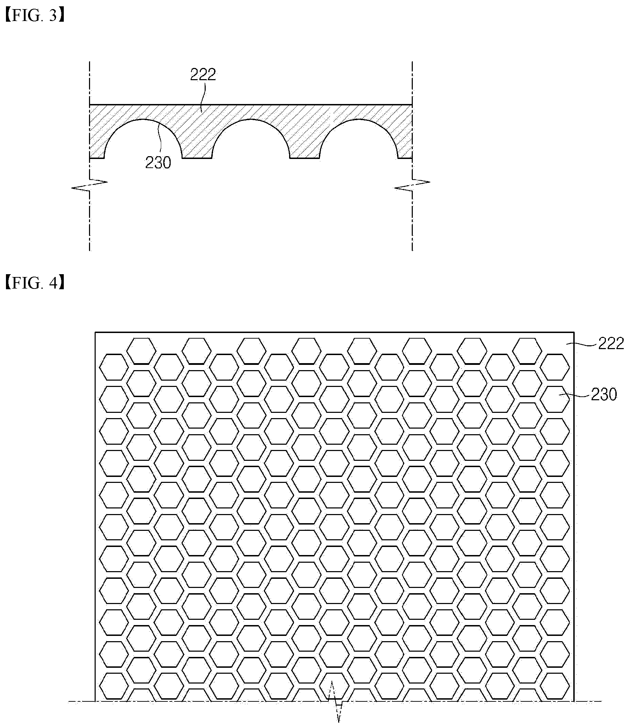

From this viewpoint of heat dissipation, the engraved structure 230 provided in the lower frame 222 of the module case 220 provides an extended heat transfer area for the thermal resin 300. FIG. 3 is a cross-sectional view cut through an incision along line "A-A" of FIG. 2, and as shown, the thermal resin 300 filled within the recessed engraved structure 230 provides an increased heat transfer surface for the battery module 200 compared to a flat contact surface.

Through the heat transfer area expanded by the engraved structures 230, the amount of heat conducted from the battery module 200 to the base plate 110 is proportionally increased, thereby allowing the heat of the battery module 200 that has generated thermal runaway to be transferred to the base plate 110 quickly and have a chance to dissipate to the outside of the battery pack 10. Thus, the plurality of engraved structures 230 formed on the bottom surface of the battery module 200 contributes to suppressing or delaying heat propagation, through the thermal resin 300.

In the embodiment of FIG. 3, the engraved structures 230 form curved surfaces including hemispherical and semi-elliptical surfaces. This is in consideration of the fact that curved surfaces are an advantageous surface shape for expanding the heat transfer area. Alternatively, as shown in FIG. 4, the engraved structure 230 may form a honeycomb structure. While the honeycomb structure may be somewhat lower than the case of FIG. 3 in terms of expanding the heat transfer area, it may be effective in compensating for or strengthening the structural rigidity of the lower frame 222, which may be weakened by the engraved structure 230.

### [second embodiment]

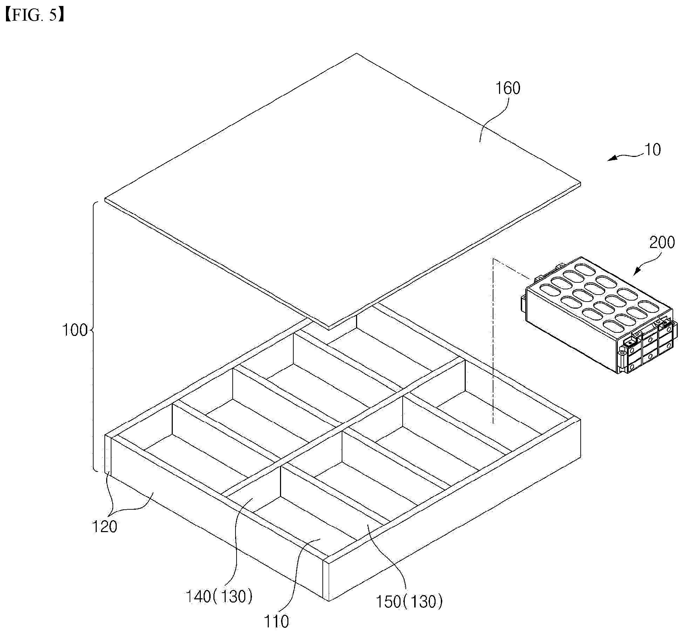

FIG. 5 is a drawing illustrating a battery pack 10 according to the present invention. A plurality of battery modules 200, as described in the first embodiment, are accommodated within a pack case 100. The pack case 100 shown includes a base plate 110 forming a low surface, a side plate 120 surrounding the periphery of the base plate 110, a separation wall member 130 longitudinally and/or transversely disposed to divide an accommodated space bounded by the side plate 120, and a lead 160 closing the upper surface of the accommodated space. Further, the base plate 110 is provided with a cooling channel 114 through which a cooling fluid is stored or flows. However, although the base plate 110 is shown in FIG. 5 as provided with the cooling channel 114, it is possible that a separate cooling plate is bonded to the base plate 110.

Here, the separation wall member 130 may be further distinguished by a longitudinal center beam 140 that crosses the center of the pack case 100, dividing the interior accommodated space from side to side, and transverse cross beams 150 that form a grid with respect to the center beam 140, depending on the direction of disposition with respect to the base plate 110.

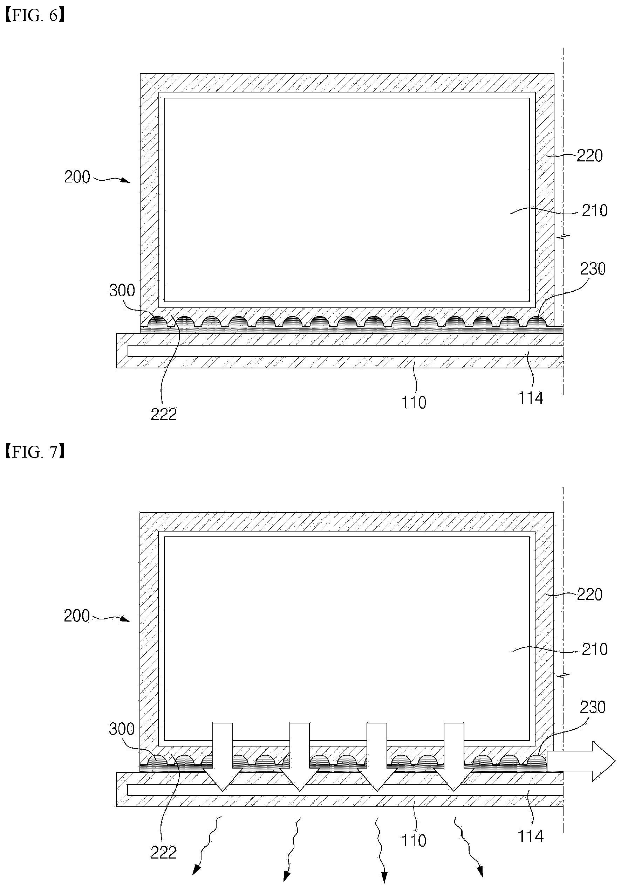

FIG. 6 is a cross-sectional view illustrating a contact surface of the battery module 200 and the base plate 110. The battery pack 10 of FIG. 6 includes a thermal resin 300 that is applied between the lower frame 222 of the battery module 200 and the base plate 110 of the pack case 100. Accordingly, a plurality of engraved structures 230 formed on the outer surface of the lower frame 222 of the module case 220 are filled with the thermal resin 300.

As described in the first embodiment, the engraved structure 230 provided in the lower frame 222 of the module case 220 provides an expanded heat transfer area for the thermal resin 300, and by the expansion of the heat transfer area in the module case 220, the amount of heat conducted from the battery module 200 to the base plate 110 is proportionally increased. FIG. 7 is a diagram illustrating a conduction heat transfer path in the battery pack 10 of FIG. 6. Assuming that the depicted battery module 200 has undergone thermal runaway, a large amount of the heat generated by the thermal runaway is transferred to the base plate 110 as conduction as the heat transfer area is increased by the engraved structure 230. A large amount of the heat transferred to the base plate 110 is dissipated through the base plate 110 and out of the battery pack 10 via the cooling fluid, thereby reducing the amount of heat propagated to other battery modules 200 in the vicinity using the base plate 110 as a heat conduction medium. This improvement in heat dissipation contributes to inhibiting and delaying heat propagation within the battery pack 10.

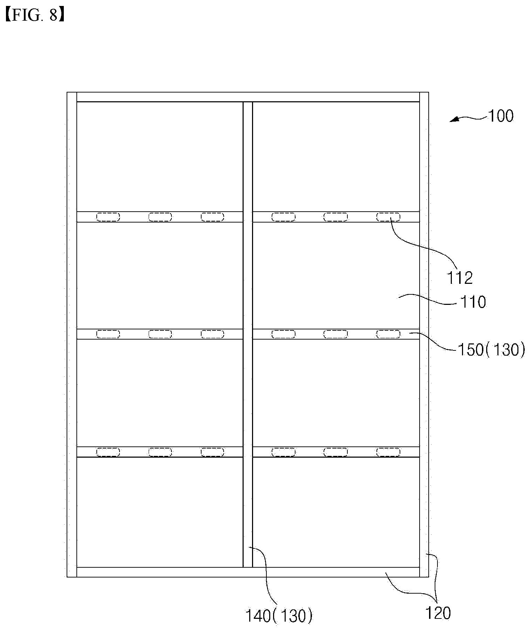

FIG. 8 is a drawing illustrating an alternative embodiment of the pack case 100. In the embodiment of the pack case 100 illustrated in FIG. 8, the pack case 100 includes a separation wall member 130 that separates a plurality of battery modules 200 from each other, meanwhile, the base plate 110 includes a through-formed slot 112 in a region in contact with the separation wall member 130. The through-formed slots 112 in the base plate 110 are intended to limit conduction heat transfer across the bottom surface of the separation wall member 130.

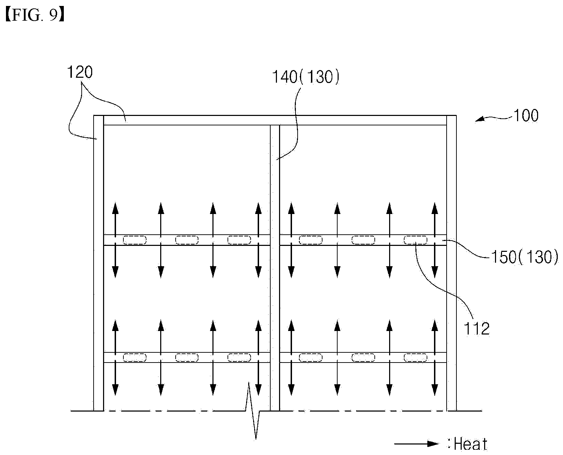

The separation wall members 130 forming the center beam 140 and/or the cross beam 150 form a boundary between the battery modules 200, and the conduction heat transfer propagating across the separation wall members 130 to the adjacent battery modules 200 is limited by the through-formed slots 112 formed through the base plate 110. In other words, as illustrated in FIG. 9, a portion of the heat conduction path between the battery modules 200 through the base plate 110 is physically eliminated by the through-formed slots 112 formed through the base plate 110, thereby reducing and delaying excessive heat transfer caused by the battery modules 200 experiencing thermal runaway. For reference, when the base plate 110 is provided with a cooling channel 114, the through-formed slot 112 structure needs to be formed by avoiding the cooling channel 114.

In another aspect, the through-formed slots 112 in the base plate 110 also serve to promote heat dissipation by convective heat transfer. In other words, conduction heat transfer propagating across the separation wall member 130 to the neighboring battery module 200 is restricted and delayed by the through- formed slots 112 in the base plate 110, thereby allowing more opportunity for heat dissipation from the base plate 110 to occur.

In one embodiment, it may be desirable that the through-formed slots 112 disposed side-by-side with respect to the separation wall members 130 do not extend beyond the separation wall members 130. To further limit conduction heat transfer, the through-formed slots 112 are through-formed on the base plate 110, which affects the tightness of the pack case 100. Thus, the tightness of the pack case 100 may be achieved by designing the through-formed slots 112 to be sized such that the separation wall member 130 completely encloses the through-formed slots 112, such that the separation wall member 130 closes the through-formed slots 112 on the base plate 110.

Further, the through-formed slots 112 may be spaced apart along the separation wall member 130. Conduction heat transfer occurs into the region between the spaced apart slots 112, and the plurality of slots 112 being spaced apart. In an embodiment, the plurality of slots 112 may be evenly spaced apart, which may be advantageous in preventing heat conducted to adjacent battery modules 200 from being locally concentrated and causing another thermal runaway.

### [Description of Reference Numerals]

10: battery pack
100: pack case
110: base plate
112: slot
114: cooling channel
120: side plate
130: separation wall member
140: center beam
150: cross beam
160: lead
200: battery module
210: battery cell
220: module case
222: lower frame
230: engraved structure
300: thermal resin

## Claims

1. A battery module (200), comprising:
a plurality of battery cells (210); and
a module case (220) configured to accommodate the plurality of battery cells (210),
**characterized in that** an outer surface of a lower frame (222) of the module case (220) is formed with a plurality of inwardly engraved structures (230), such that an inner surface of the lower frame (222) is flat, and
wherein the plurality of engraved structures (230) includes a space for accommodating a thermal resin (300).

2. The battery module (200) of claim 1, wherein the engraved structure (230) includes a lattice structure uniformly arranged longitudinally with respect to the outer surface of the lower frame (222).

3. The battery module (200) of claim 2, wherein the engraved structure (230) includes an inwardly recessed space.

4. The battery module (200) of claim 1, wherein the engraved structure (230) increases the heat transfer area of the lower frame (222) compared to a flat contact surface with respect to the thermal resin (300) to be accommodated in the engraved structure (230).

5. The battery module (200) of claim 1, wherein the engraved structure (230) includes a curved surface including a hemispherical surface and a semi-elliptical surface.

6. The battery module (200) of claim 2, wherein the engraved structure (230) includes a honeycomb structure.

7. A battery pack (10), comprising:
a plurality of battery modules (200) according to any one claim among claim 1 to claim 6;
a pack case (100) configured to accommodate the plurality of the battery modules (200); and
a thermal resin (300) applied between a lower frame (222) of the battery modules (200) and a base plate (110) of the pack case (100),
wherein the thermal resin (300) being filled within a plurality of engraved structures (230) formed on an outer surface of the lower frame (222) of the pack case (100).

8. The battery pack (10) of claim 7, wherein the area of conduction heat transfer flowing to the base plate (110) through the thermal resin (300) filled in the engraved structures (230) is increased as compared to a flat contact surface.

9. The battery pack (10) of claim 7, wherein the pack case (100) comprises a separation wall member (130) dividing the plurality of battery modules (200) from each other,
the base plate (110) forms a bottom surface of the pack case (100) and the base plate (110) comprises a through-formed slot (112) formed through a region in contact with the separation wall member (130).

10. The battery pack (10) of claim 9, wherein the through-formed slot (112) is not exposed outside of the separation wall member (130).

11. The battery pack (10) of claim 9, wherein the through-formed slot (112) is formed in a plurality of through-formed slots (112) that are spaced apart along the separation wall member (130).

12. The battery pack (10) of claim 9, wherein the through-formed slot (112) is configured to promote heat dissipation by convective heat transfer.

## Patentansprüche

1. Batteriemodul (200), umfassend:
eine Mehrzahl von Batteriezellen (210); und
ein Modulgehäuse (220), welches dazu eingerichtet ist, die Mehrzahl von Batteriezellen (210) aufzunehmen,
**dadurch gekennzeichnet, dass** eine äußere Fläche eines unteren Rahmens (222) des Modulgehäuses (220) mit einer Mehrzahl nach innen gravierter Strukturen (230) gebildet ist, so dass eine innere Fläche des unteren Rahmens (222) flach ist, und
wobei die Mehrzahl gravierter Strukturen (230) einen Raum zum Aufnehmen eines thermischen Harzes (300) umfasst.

2. Batteriemodul (200) nach Anspruch 1, wobei die gravierte Struktur (230) eine Gitterstruktur umfasst, welche longitudinal in Bezug auf die äußere Fläche des unteren Rahmens (222) uniform angeordnet ist.

3. Batteriemodul (200) nach Anspruch 2, wobei die gravierte Struktur (230) einen nach innen vertieften Raum umfasst.

4. Batteriemodul (200) nach Anspruch 1, wobei die gravierte Struktur (230) den Wärmetransferbereich des unteren Rahmens (222) im Vergleich zu einer flachen Kontaktfläche in Bezug auf das thermische Harz (300) erhöht, welches in der gravierten Struktur (230) aufzunehmen ist.

5. Batteriemodul (200) nach Anspruch 1, wobei die gravierte Struktur (230) eine gekrümmte Fläche umfasst, welche eine halbkugelförmige Fläche und eine halbelliptische Fläche umfasst.

6. Batteriemodul (200) nach Anspruch 2, wobei die gravierte Struktur (230) eine Bienenwabenstruktur umfasst.

7. Batteriepack (10), umfassend:
eine Mehrzahl von Batteriemodulen (200) nach einem Anspruch unter Anspruch 1 bis 6;
ein Packgehäuse (100), welches dazu eingerichtet ist, die Mehrzahl der Batteriemodule (200) aufzunehmen; und
ein thermisches Harz (300), welches zwischen einem unteren Rahmen (222) der Batteriemodule (200) und einer Basisplatte (110) des Packgehäuses (100) aufgebracht ist,
wobei das thermische Harz (300) in eine Mehrzahl gravierter Strukturen (230) gefüllt ist, welche an einer äußeren Fläche des unteren Rahmens (222) gebildet sind.

8. Batteriepack (10) nach Anspruch 7, wobei der Bereich von Wärmeleitungstransfer, welcher durch das in die gravierten Strukturen (230) gefüllte thermische Harz (300) zu der Basisplatte (110) fließt, im Vergleich zu einer flachen Kontaktfläche erhöht ist.

9. Batteriepack (10) nach Anspruch 7, wobei das Packgehäuse (100) ein Trennwandelement (130) umfasst, welches die Mehrzahl von Batteriemodulen (200) voneinander trennt,
wobei die Basisplatte (110) eine Bodenfläche des Packgehäuses (100) bildet und die Basisplatte (110) einen durchgehenden Schlitz (112) umfasst, welcher durch einen Bereich gebildet ist, welcher in Kontakt mit dem Trennwandelement (130) steht.

10. Batteriepack (10) nach Anspruch 9, wobei der durchgehende Schlitz (112) nicht außerhalb des Trennwandelements (130) freigelegt ist.

11. Batteriepack (10) nach Anspruch 9, wobei der durchgehende Schlitz (112) in einer Mehrzahl durchgehender Schlitze (112) gebildet ist, welche entlang des Trennwandelements (130) beabstandet sind.

12. Batteriepack (10) nach Anspruch 9, wobei der durchgehende Schlitz (112) dazu eingerichtet ist, eine Wärmeableitung durch einen konvektiven Wärmetransfer zu fördern.

## Revendications

1. Module de batterie (200), comprenant :
une pluralité d'éléments de batterie (210) ; et
un boîtier de module (220) configuré pour loger la pluralité d'éléments de batterie (210),
**caractérisé en ce qu'**une surface externe d'un cadre inférieur (222) du boîtier de module (220) est formée avec une pluralité de structures gravées (230) vers l'intérieur, de sorte qu'une surface interne du cadre inférieur (222) est plate, et
dans lequel la pluralité de structures gravées (230) comporte un espace pour loger une résine thermique (300).

2. Module de batterie (200) selon la revendication 1, dans lequel la structure gravée (230) comporte une structure en treillis uniformément disposée longitudinalement par rapport à la surface externe du cadre inférieur (222).

3. Module de batterie (200) selon la revendication 2, dans lequel la structure gravée (230) comporte un espace en retrait vers l'intérieur.

4. Module de batterie (200) selon la revendication 1, dans lequel la structure gravée (230) augmente la zone de transfert de chaleur du cadre inférieur (222) comparativement à une surface de contact plate par rapport à la résine thermique (300) à loger dans la structure gravée (230).

5. Module de batterie (200) selon la revendication 1, dans lequel la structure gravée (230) comporte une surface incurvée comportant une surface hémisphérique et une surface semi-elliptique.

6. Module de batterie (200) selon la revendication 2, dans lequel la structure gravée (230) comporte une structure en nid d'abeille.

7. Bloc-batterie (10), comprenant :
une pluralité de modules de batterie (200) selon l'une quelconque des revendications 1 à 6 ;
un boîtier de bloc (100) configuré pour loger la pluralité de modules de batterie (200) ; et
une résine thermique (300) appliquée entre un cadre inférieur (222) des modules de batterie (200) et une plaque de base (110) du boîtier de bloc (100),
dans lequel la résine thermique (300) est remplie dans une pluralité de structures gravées (230) formées sur une surface externe du cadre inférieur (222) du boîtier de bloc (100).

8. Bloc-batterie (10) selon la revendication 7, dans lequel la zone de transfert de chaleur par conduction circulant vers la plaque de base (110) à travers la résine thermique (300) remplie dans les structures gravées (230) est augmentée comparativement à une surface de contact plate.

9. Bloc-batterie (10) selon la revendication 7, dans lequel le boîtier de bloc (100) comprend un organe de paroi de division (130) séparant la pluralité de modules de batterie (200) les uns des autres,
la plaque de base (110) forme une surface inférieure du boîtier de bloc (100) et la plaque de base (110) comprend une fente formée traversante (112) formée à travers une région en contact avec l'organe de paroi de division (130).

10. Bloc-batterie (10) selon la revendication 9, dans lequel la fente formée traversante (112) n'est pas exposée à l'extérieur de l'organe de paroi de division (130).

11. Bloc-batterie (10) selon la revendication 9, dans lequel la fente formée traversante (112) est formée en une pluralité de fentes formées traversantes (112) qui sont espacées le long de l'organe de paroi de division (130).

12. Bloc-batterie (10) selon la revendication 9, dans lequel la fente formée traversante (112) est configurée pour favoriser la dissipation de chaleur par transfert de chaleur par convection.
